# EUROPÄISCHE PATENTSCHRIFT

(11) **EP 3 642 671 B1**
(45) Veröffentlichungstag und Bekanntmachung des Hinweises auf die Patenterteilung: **03.07.2024**
(21) Anmeldenummer: 18740514.7
(22) Anmeldetag: 29.05.2018
(51) Int. Cl.: G02F 1/1333, B60J 1/00, B60J 3/04, E06B 3/67, E06B 9/24, G02B 27/01

(54) **FAHRZEUGSCHEIBE MIT FLÜSSIGKRISTALLANORDNUNG**
VEHICLE WINDOW PANE HAVING A LIQUID CRYSTAL DEVICE
VITRE DE VÉHICULE AVEC DISPOSITIF A CRISTAUX LIQUIDES

(30) Priorität: 23.06.2017 DE 102017113987
(43) Veröffentlichungstag der Anmeldung: 29.04.2020
(73) Patentinhaber: Webasto SE, 82131 Stockdorf (DE)
(72) Erfinder: BAIERL, Daniela, 82131 Stockdorf (DE); LORENZ, Steffen, 82131 Stockdorf (DE); DIETRICH, Jonas, 82131 Stockdorf (DE); BUCHMANN, Max, 80801 M nchen (DE); GROTHE, Jan, 82131 Stockdorf (DE); HEISEL, Oliver, 82131 Stockdorf (DE); KRACHENFELS, Kim, 82131 Stockdorf (DE)
(74) Vertreter: advotec.
(86) Internationale Anmeldenummer: PCT/EP2018/064087
(87) Internationale Veröffentlichungsnummer: WO 2018/233990

(56) Entgegenhaltungen:
- EP-A2- 0 343 419
- WO-A1-2007/077099
- WO-A2-94/11779
- DE-T5-112013 006 193
- US-A1- 2005 068 629
- US-A1- 2015 367 782
- US-B1- 6 466 298

## Beschreibung

Die Erfindung betrifft eine Fahrzeugscheibe mit den Merkmalen des Oberbegriffs des Patentanspruchs 1.

Eine derartige Fahrzeugscheibe ist aus der Praxis bekannt und kann ein verstellbares oder festes Dachelement eines Kraftfahrzeuges sein. Die Fahrzeugscheibe umfasst einen plattenartigen Scheibenkörper, der in der Regel aus Glas besteht und die Außenhaut des Dachelementes bildet. An seiner Innenseite ist der Scheibenkörper mit einer Flüssigkristallanordnung versehen, die elektrisch schaltbar ist und so die Lichtdurchlässigkeit der Fahrzeugscheibe vorgibt. In Abhängigkeit vom Schaltzustand der Flüssigkristallanordnung ist die Fahrzeugscheibe entweder weitgehend lichtdurchlässig oder weitgehend lichtundurchlässig, so dass sie eine Beschattungsanordnung bildet.

Des Weiteren ist es bekannt, Flüssigkristalle in Tröpfchenform in ein Polymer einzubinden. Im Grundzustand sind die Flüssigkristalle ungeordnet, weswegen im Wesentlichen keine Lichttransmission möglich ist. Es liegt ein milchiges Erscheinungsbild vor. Wenn hingegen an die entsprechende Flüssigkristallzellen Spannung angelegt wird, richten sich die Flüssigkristalle aus, wodurch Licht transmittiert werden kann.

Ferner ist es bekannt, bei Fahrzeugscheiben sogenannte SPD (Suspended Particle Device)-Folien einzusetzen, um eine Beschattungseinrichtung bereitzustellen. Eine SPD-Folie umfasst in einer entsprechenden Zelle kleine, stäbchenförmige Partikel, die in einen dünnen Kunststofffilm eingebunden und zunächst willkürlich ausgerichtet sind. Unter einem elektrischen Feld richten sich diese Partikel aus, so dass Licht transmittiert werden kann. Jedoch besteht das Problem, dass solche SPD-Folien nur in blau und nicht in einer neutralen Farbe herstellbar sind, die bei einem Kraftfahrzeug ohne weiteres eingesetzt werden kann.

Aus Druckschrift US 2005/0068629 A1 ist eine Fahrzeugscheibe bekannt, die zwei Scheibenkörper umfasst, zwischen denen eine Flüssigkristallanordnung angeordnet ist. Angrenzend an die Scheibenkörper sind Polarisatorschichten vorgesehen, die damit zwischen dem jeweiligen Scheibenkörper und der Flüssigkristallanordnung angeordnet sind. Die Flüssigkristallanordnung ist über flexible Schichten an die Scheibenkörper angebunden.

Bisher besteht grundsätzlich das Problem, gewölbte Fahrzeugscheiben, insbesondere dreidimensional gewölbte Fahrzeugscheiben mit einer Flüssigkristallanordnung als Beschattungsanordnung zu versehen, die eine gleichmäßige Beschattung mit geringem Transmissionsgrad ermöglicht.

Der Erfindung liegt die Aufgabe zugrunde, eine Fahrzeugscheibe gemäß der einleitend genannten Gattung ausgebildete Fahrzeugscheibe zu schaffen, die eine Flüssigkristallanordnung mit gleichmäßigem Beschattungsverhalten auch bei einem dreidimensional gewölbten Scheibenkörper aufweist.

Diese Aufgabe ist erfindungsgemäß durch die Fahrzeugscheibe mit den Merkmalen des Patentanspruchs 1 gelöst.

Erfindungsgemäß wird also eine Fahrzeugscheibe vorgeschlagen, die einen plattenartigen, gewölbten Scheibenkörper umfasst, der eine einer Fahrzeugumgebung zugewandte Außenseite und eine der Außenseite abgewandte Innenseite hat und an dessen Innenseite eine Beschattungsanordnung angeordnet ist, die aus einer Flüssigkristallanordnung gebildet ist, welche eine Flüssigkristallzelle umfasst. Die Flüssigkristallanordnung umfasst zwei Folien, zwischen denen die Flüssigkristallzelle angeordnet ist, und ist über eine Längenausdehnungskompensationsschicht an den Scheibenkörper angebunden. Durch die Anordnung der Flüssigkristallzelle zwischen zwei Folien kann die Flüssigkristallanordnung der Form des plattenartigen und gewölbten Scheibenkörpers folgen, der aus Glas oder einem Kunststoff, wie einem Polycarbonat oder PMMA, bestehen kann. Dadurch ist es auch möglich, den Scheibenkörper mit einer dreidimensionalen Wölbung auszubilden, so dass der Scheibenkörper eine Wölbung entlang einer Scheibenlängsrichtung und eine Wölbung entlang einer Scheibenquerrichtung hat. Mit der Längenausdehnungskompensationsschicht, die insbesondere elastisch ausgebildet sein kann, werden Spannungen aufgefangen, die beispielsweise begründet durch ein unterschiedliches thermisches Ausdehnungsverhalten zwischen dem Scheibenkörper und der Flüssigkristallanordnung auftreten können. Damit kann die Flüssigkristallanordnung über ihre Fläche, die sich vorzugsweise über einen Großteil des Scheibenkörpers erstreckt, in Abhängigkeit vom Schaltzustand der Flüssigkristallzelle eine konstante Durchlässigkeit für Licht, das heißt ein konstantes Transmissionsverhalten aufweisen.

Bei der Fahrzeugscheibe nach der Erfindung ist die Funktion der Flüssigkristallzelle zwischen zwei Folien eingebracht, so dass eine gute Verformbarkeit der Flüssigkristallanordnung gewährleistet ist. Zudem kann eine homogene Schichtdicke der Flüssigkristallzelle über ihre Erstreckung erzielt werden.

Die Längenausdehnungskompensationsschichten haben vorzugsweise auch adhäsive Eigenschaften, so dass auf zusätzliche Klebeschichten zwischen den einzelnen Schichten des Verbundaufbaus verzichtet werden kann.

Der Scheibenkörper kann eine dreidimensionale Wölbung haben. Beispielsweise hat der Scheibenkörper in zwei Richtungen, bei einer Dachscheibe entlang einer Fahrzeugquerrichtung und entlang einer Fahrzeuglängsrichtung, jeweils eine Wölbung mit einem Krümmungsradius zwischen 1000 mm und 10000 mm, vorzugsweise zwischen 2000 mm und 5000 mm, der sich über die Wölbung ändern kann, d. h. in der jeweiligen Richtung nicht konstant sein muss. Über die Wölbung, das heißt in Scheibenquerrichtung und/oder Scheibenlängsrichtung, kann der Krümmungsradius variieren, das heißt er muss nicht konstant sein.

Die Flüssigkristallanordnung der Fahrzeugscheibe nach der Erfindung kann mit kurzen Schaltzeiten, die bei etwa einer Sekunde liegen, über einen weiten Temperaturbereich betrieben werden. Zudem kann eine geringe Spannung zur Betätigung der Flüssigkristallanordnung ausreichen. Die als Wechselspannung ausgebildete Spannung kann insbesondere unter 30 V liegen. Die Frequenz der Wechselspannung beträgt beispielsweise 60 Hz, kann aber je nach gewünschter Geschwindigkeit der Ausrichtung der Flüssigkristalle auch höher sein und bis zu 100 bis 120 Hz betragen oder auch niedriger sein.

Ferner bietet die Flüssigkristallanordnung im ungeschalteten Zustand eine sehr geringe Transmission, die für sichtbares Licht unter 1% liegt. Die Farbe der Flüssigkristallanordnung ist beispielsweise grau, kann aber durch Beimischung von Farbstoffen kundenspezifisch angepasst werden.

Die Fahrzeugscheibe nach der Erfindung ist insbesondere ein Dachelement des betreffenden Fahrzeugs. Dieses Dachelement kann als Festdachelement, das starr mit dem Aufbau des betreffenden Fahrzeugs verbunden ist, oder auch als bewegliches Dachelement ausgebildet sein, das ein Deckelelement einer Schiebedachanordnung darstellt.

Bei der Fahrzeugscheibe nach der Erfindung ist die insbesondere optisch isotrope Längenausdehnungskompensationsschicht eine Acrylatschicht, eine Schicht aus thermoplastischem Polyurethan, eine Epoxidschicht, eine Silikonschicht oder eine Schicht aus einem vernetzenden Material, wie Ethylenvinylacetat (EVA) oder Polyvinylbutyral (PVB). Insbesondere kann hierzu bei der Herstellung eine aus einem entsprechenden Werkstoff hergestellte Kunststofffolie eingesetzt werden, die durch thermoplastische und/oder vernetzende reaktive Eigenschaften bei der Erwärmung einen Verbund mit dem Scheibenkörper und einer Folie der Flüssigkristallanordnung eingeht. Denkbar ist es natürlich auch, für die Längenausdehnungskompensationsschicht einen anderen Werkstoff einzusetzen, der elastische Eigenschaften hat und Spannungen aufnehmen kann.

Um die Spannungen zwischen dem Scheibenkörper und der Flüssigkristallanordnung in hohem Maße aufnehmen zu können, hat die Längenausdehnungskompensationsschicht vorzugsweise eine Dicke von mindestens 0,2 mm und insbesondere von mindestens 0,4 mm.

Bei der Fahrzeugscheibe nach der Erfindung ist an deren Innenseite ein Scheibeninnenkörper angeordnet. Die Flüssigkristallanordnung ist zwischen dem Scheibenkörper, der die Außenseite der Fahrzeugscheibe bildet, und dem Scheibeninnenkörper angeordnet.

Der Scheibeninnenkörper kann entsprechend dem Scheibenkörper ausgebildet sein. Dies bedeutet, dass sowohl der Scheibenkörper als auch der Scheibeninnenkörper beispielsweise aus Glas mit einer Dicke von etwa 1,5 bis 2,6 mm gebildet sind. Bei einer speziellen Ausführungsform der Fahrzeugscheibe nach der Erfindung ist der Scheibeninnenkörper aber aus einem Dünnglas gebildet, das biegsam ist und damit an eine etwaige Wölbung des plattenartigen Scheibenkörpers anpassbar ist. Das Dünnglas, das ein chemisch vorgespanntes Glas sein kann, hat beispielsweise eine Dicke zwischen 0,1 mm und 1,5 mm. Die Biegsamkeit bzw. Flexibilität eines Dünnglases kann das thermische Ausdehnungsverhalten der Flüssigkristallanordnung ausgleichen, so dass wiederum einer etwaigen Beschädigung der Flüssigkristallanordnung aufgrund von Temperaturänderungen entgegengewirkt werden kann.

Um das Abschattungsverhalten der Fahrzeugscheibe nach der Erfindung weiter zu verbessern, ist bei der Fahrzeugscheibe zwischen dem Scheibeninnenkörper und der Flüssigkristallanordnung eine Polarisatorschicht angeordnet.

Alternativ kann die Polarisatorschicht zwischen dem Scheibenkörper und der Flüssigkristallanordnung angeordnet sein.

Die Polarisatorschicht hat vorzugsweise eine Polarisationsrichtung, die rechtwinklig zu einer Polarisationsrichtung der Flüssigkristallzelle im ungeschalteten Zustand ausgerichtet ist. Der geschaltete Zustand ist dann dem Transmissionszustand zugeordnet. Denkbar ist es aber auch, dass im ungeschalteten Zustand der Flüssigkristallzelle die Polarisationsrichtung der Polarisatorschicht parallel zur Polarisationsrichtung der Flüssigkristallzelle ist, so dass dann der Transmissionszustand der Anordnung vorliegt.

Um durch unterschiedliches thermisches Ausdehnungsverhalten begründete Spannungen zwischen der Flüssigkristallanordnung und der Polarisatorschicht aufnehmen zu können, ist die Polarisatorschicht über eine zweite Längenausdehnungskompensationsschicht an die Flüssigkristallanordnung angebunden.

Auch die zweite, vorzugsweise optisch isotrope Längenausdehnungskompensationsschicht ist aus einer Acrylatschicht, einer Schicht aus thermoplastischem Polyurethan, einer Epoxidschicht oder aus einer Silikonschicht gebildet sein. Auch andere denkbare Werkstoffe, wie vernetzende Materialen, z. B. Ethylenvinylacetat (EVA) oder Polyvinylbutyral (PVB), können eingesetzt werden, die elastische Eigenschaften haben und Spannungen aufnehmen können.

Die zweite Längenausdehnungskompensationsschicht hat vorzugsweise eine Dicke von mindestens 0,2 mm und insbesondere von mindestens 0,4 mm.

Vorzugsweise hat die zweite Längenausdehnungskompensationsschicht einen Brechungsindex, der dem Brechungsindex der Folien der Flüssigkristallanordnung entspricht. Damit kann einer Mehrfachbrechung des Lichts beim Durchlaufen der Flüssigkristallanordnung, der zweiten Längenausdehnungskompensationsschicht und der Polarisatorschicht zumindest teilweise entgegengewirkt werden.

Zur Anbindung des Scheibeninnenkörpers bzw. des Scheibenkörpers an die Polarisatorschicht ist eine dritte Längenausdehnungskompensationsschicht vorgesehen sein, die ein unterschiedliches thermisches Ausdehnungsverhalten der Polarisatorschicht und des Innenscheibenkörpers kompensieren kann.

Die dritte, vorzugsweise optisch isotrope Längenausdehnungskompensationsschicht ist entsprechend den anderen beiden Längenausdehnungskompensationsschichten aus einer Acrylatschicht, einer Schicht aus thermoplastischem Polyurethan, einer Epoxidschicht, einer Silikonschicht oder einer Schicht aus einem vernetzenden Material, wie Ethylenvinylacetat (EVA) oder Polyvinylbutyral (PVB), gebildet oder auch aus einem anderen Werkstoff gebildet, der elastische Eigenschaften hat und Spannungen aufnehmen kann.

Auch die dritte Längenausdehnungskompensationsschicht hat vorzugsweise eine Dicke von mindestens 0,2 mm und insbesondere von mindestens 0,4 mm.

Um die Flüssigkristallanordnung geschützt in der Fahrzeugscheibe nach der Erfindung aufzunehmen und damit vor Umwelteinflüssen bzw. vor Feuchtigkeit und Sauerstoff zu schützen, ist vorzugsweise eine Randversiegelung vorgesehen, die zumindest die Flüssigkristallanordnung und die Längenausdehnungskompensationsschicht an deren Rändern übergreift. Die Randversiegelung ist beispielsweise aus einer Acrylatschicht, einer Schicht aus thermoplastischem Polyurethan, einer Epoxidschicht, einer Silikonschicht gebildet oder einer Schicht aus einem vernetzenden Material, wie Ethylenvinylacetat (EVA) oder Polyvinylbutyral (PVB) gebildet.

Die beiden Folien der Flüssigkristallanordnung sind beispielsweise jeweils aus einer transparenten Folie aus PET (Polyethylenterephthalat) oder Polycarbonat gebildet, die vorzugsweise eine Dicke zwischen 50µm und 250 µm hat. Diese beiden Folien stellen jeweils ein Substrat dar, auf denen eine leitfähige Schicht zur elektrischen Anbindung der Flüssigkristallzelle an ein Bordnetz des betreffenden Fahrzeugs angeordnet ist. Auf den leitfähigen Schichten ist jeweils zweckmäßigerweise eine Ausrichtungsschicht (alignment layer) angeordnet. Die Ausrichtungsschichten begrenzen jeweils die Flüssigkristallzelle und dienen zur Vorausrichtung der Flüssigkristalle in der Flüssigkristallzelle. Zudem sind die beiden Ausrichtungsschichten durch Abstandshalter voneinander getrennt, so dass die Dicke der Flüssigkristallzelle, in der die Flüssigkristalle angeordnet sind, über die Erstreckung der Flüssigkristallanordnung zumindest weitgehend konstant ist.

Bei einer bevorzugten Ausführungsform der Fahrzeugscheibe nach der Erfindung umfasst die Flüssigkristallanordnung eine einzige Flüssigkristallzelle, die sich zumindest weitgehend über die gesamte Flüssigkristallanordnung erstreckt, die vorzugsweise den potentiellen Durchsichtsbereich der Fahrzeugscheibe abdeckt.

Des Weiteren ist es auch denkbar, dass die Flüssigkristallzelle der Fahrzeugscheibe nach der Erfindung segmentiert ist und schaltbare Untereinheiten aufweist.

Bei einer weiteren speziellen Ausführungsform der Fahrzeugscheibe nach der Erfindung ist die Flüssigkristallanordnung derartig ausgestaltet, dass mindestens eine der beiden Folien derselben an der der Flüssigkristallzelle abgewandten Seite mit einer Zusatzsubstratschicht versehen ist, die die Flüssigkristallanordnung mechanisch stabilisiert. Die Zusatzsubstratschicht kann eine etwaige Welligkeit der Flüssigkristallanordnung reduzieren und sogar verhindern, was wiederum das Risiko von Fehlerbildern reduziert. Zudem kann die Zusatzsubstratschicht die Diffusion von Feuchtigkeit und Sauerstoff in Richtung der Flüssigkristallzelle verhindern. Die Zusatzsubstratschicht kann auch dazu dienen, thermisch bedingte Ausdehnungsunterschiede der einzelnen Schichten des Schichtaufbaus der Fahrzeugscheibe nach der Erfindung zu reduzieren.

Vorzugsweise sind beide Folien der Flüssigkristallanordnung an ihrer der Flüssigkristallzelle abgewandten Seite mit der Zusatzsubstratschicht versehen.

Die Zusatzsubstratschicht kann aus einem beliebigen geeigneten Kunststoffwerkstoff gefertigt sein. Beispielsweise ist sie aus Polyethylen und/oder Polycarbonat gebildet.

Die Anbindung der Zusatzsubstratschicht an die betreffende Folie der Flüssigkristallanordnung erfolgt vorzugsweise über eine Klebstoffschicht, die ein vernetzendes Material, wie Ethylen-Vinylacetat (EVA), umfassen kann. Die Klebstoffschicht kann aus einem Haftklebstoff bzw. PSA (Pressure-Sensitive Adhesive) gebildet sein. Auch die Verwendung eines thermoplastischen Polyurethans ist denkbar.

Vorzugsweise ist die Zusatzsubstratschicht auf die betreffende Folie auflaminiert. Die Lamination kann nach einem Rollenlaminationsprozess erfolgen.

Eine spezielle Ausführungsform der Fahrzeugscheibe nach der Erfindung umfasst eine Lichtleiterschicht, die über ihren Rand mit einer Lichtquelle verbindbar ist oder über ihren Rand mit einer Lichtquelle verbunden ist. Die Lichtleiterschicht, die bei der Herstellung der Fahrzeugscheibe zusammen mit der Flüssigkristallanordnung und den etwaigen weiteren Schichten in einem einstufigen Prozess integriert werden kann, kann ein Beleuchtungssystem für den Innenraum des betreffenden Fahrzeugs darstellen. Insbesondere ist die Lichtleiterschicht Bestandteil einer sogenannten Ambient-Light-Beleuchtung des betreffenden Fahrzeugs. Bei dieser Ausführungsform sind also die Funktionalität der schaltbaren Flüssigkristallanordnung und die Funktionalität einer flächigen Beleuchtung, insbesondere einer Ambient-Light-Beleuchtung miteinander kombiniert. Zweckmäßigerweise sind die Lichtleiterschicht und die Flüssigkristallanordnung separat und unabhängig ansteuerbar, d. h. so schaltbar, dass die Flüssigkristallanordnung ihren Transmissionszustand oder ihren Sperrzustand einnimmt und die Lichtleiterschicht leuchtet oder nicht leuchtet.

Beim Verbinden der einzelnen Schichten der Fahrzeugscheibe müssen die Prozessparameter so auf die Flüssigkristallanordnung und die Lichtleiterschicht abgestimmt sein, dass sowohl die Haftung der beiden Schichten als auch die Funktion beider Schichten gewährleistet ist.

Bei einer speziellen Ausführungsform der Fahrzeugscheibe nach der Erfindung ist die Lichtleiterschicht an der der Fahrzeugumgebung abgewandten Seite der Flüssigkristallanordnung angeordnet. Dies bedeutet, dass die Lichtleiterschicht unabhängig vom Schaltzustand der Flüssigkristallanordnung vom Innenraum des betreffenden Fahrzeugs sichtbar ist, wenn sie aktiviert ist.

Insbesondere kann die Lichtleiterschicht eine innere Sichtfläche der Fahrzeugscheibe bilden.

Die Lichtleiterschicht kann aus beliebigen geeigneten Werkstoffen gefertigt sein. Insbesondere kann die Lichtleiterschicht einen flächigen Glaskörper umfassen, der den Vorteil bietet, dass auf weitere Schutzschichten an der Innenseite der Fahrzeugscheibe gegebenenfalls, verzichtet werden kann.

Bei einer alternativen Ausführungsform der Fahrzeugscheibe nach der Erfindung kann die Lichtleiterschicht eine Kunststofffolie und/oder eine Kunststoffplatte umfassen. Dies ist insbesondere vorteilhaft, wenn die Fahrzeugscheibe gewichtsoptimiert ausgebildet sein soll.

Um der Lichtleiterschicht spezielle gewünschte Leuchteigenschaften verleihen zu können, enthält sie vorzugsweise Streuzentren, die insbesondere von Nanopartikeln gebildet sein können. Die Streuzentren sind insbesondere homogen in der Lichtleiterschicht verteilt.

Bei einer weiteren speziellen Ausführungsform der Fahrzeugscheibe nach der Erfindung weist die Lichtleiterschicht eine Bedruckung auf, welche beispielsweise ein Leuchtmuster vorgibt und auch als Reflexionsschicht dienen kann.

Denkbar ist es auch, dass die Flüssigkristallanordnung eine Reflexionsschicht aufweist.

Zum Schutz vor Beschädigungen kann die Lichtleiterschicht des Weiteren eine Kratzfestbeschichtung aufweisen.

Grundsätzlich kann die Fertigung der Fahrzeugscheibe nach der Erfindung auf unterschiedliche Art und Weise erfolgen. Beispielsweise werden die einzelnen Schichten der Fahrzeugscheibe nach einem Vakuumlaminations- bzw. Autoklavprozess verbunden, wobei der Verbund aus den einzelnen Schichten bestimmten Drücken und bestimmten Temperaturen ausgesetzt wird. Insbesondere können hierbei adhäsive Kunststofffolien als Längenausdehnungskompensationsschichten eingesetzt werden, die durch thermoplastische oder vernetzende Eigenschaften bei einer Erwärmung einen Verbund mit den anderen Schichten, das heißt mit dem Scheibenkörper, der Flüssigkristallanordnung, der Polarisatorschicht und/oder dem Scheibeninnenkörper eingehen. Bei einer speziellen Vakuumlamination findet eine einseitige Erwärmung des Verbunds durch eine Heizplatte statt, wobei eine Druckbeaufschlagung über eine Druckdifferenz in einer Kammer erfolgt, die durch eine Membran zweigeteilt ist. Bei einer Fertigung in einer Autoklavenkammer wird das Laminat allumseitig mittels zirkulierender Luft erwärmt. Es können Luftdrücke bis zu etwa 15 bar eingestellt werden.

Alternativ kann die Herstellung der Fahrzeugscheibe nach der Erfindung nach einem so genannten Optical-Bonding-Verfahren erfolgen, bei dem optisch hochtransparente und vergilbungsfreie Klebstoffe als Längenausdehnungskompensationsschichten eingesetzt werden. Insbesondere können Silikone eingesetzt werden, die eine hohe Temperaturstabilität haben und später zerstörungsfrei abgelöst werden könnten. Auch könnten Polyurethane, Acrylate oder Epoxide eingesetzt werden.

Ein Verfahren zur Herstellung einer Fahrzeugscheibe umfasst folgende Schritte:
- Erstellen eines Aufbaus aus mehreren Schichten in gestapelter Form in einem Rahmen, wobei der Aufbau einen Scheibenkörper, eine Flüssigkristallanordnung, die eine Flüssigkristallzelle und zwei Folien umfasst, zwischen denen die Flüssigkristallzelle angeordnet ist, und eine Längenausdehnungskompensationsschicht zwischen der Flüssigkristallanordnung und dem Scheibenkörper umfasst, wobei zumindest die Flüssigkristallanordnung und die Längenausdehnungs-Kompensationsschicht in einem Rahmen angeordnet werden, der deren Relativlage definiert;
- Einbringen des Aufbaus mit dem Rahmen in einen Vakuumbeutel;
- Entlüften des Vakuumbeutels und Ausüben eines Drucks auf den Vakuumbeutel, so dass die Schichten des Aufbaus miteinander verbunden werden;
- Entnehmen des verfügten Aufbaus aus dem Vakuumbeutel.

Durch das so realisierte Verfahren ist es möglich, die Schichten des Aufbaus der Fahrzeugscheibe sauber und positionsgenau miteinander zu verfügen und somit ohne weitere Prozessschritte eine Fahrzeugscheibe zu realisieren, die an dem betreffenden Fahrzeug einsetzbar ist.

Um das Verfügen der einzelnen Schichten des Aufbaus zu verbessern und/oder zu beschleunigen, wird der in dem Vakuumbeutel angeordnete Aufbau erwärmt, während er dem Druck ausgesetzt wird. Die Temperaturen, auf die der Aufbau erwärmt wird, liegen beispielsweise zwischen 50 °C und 150 °C. Der Druck, der auf den Vakuumbeutel ausgeübt wird, liegt vorzugsweise in einem Bereich zwischen 1 bar und 20 bar, insbesondere zwischen 1 bar und 12 bar. Dieser Prozess kann in einer Autoklavenkammer durchgeführt werden.

Um den Aufbau in dem Rahmen zu stabilisieren, kann er mit einer Druckplatte abgedeckt werden. Die Druckplatte stellt eine Hilfsstruktur dar, die gewährleistet, dass die einzelnen Schichten des Aufbaus während des Fügeprozesses ihre Form beibehalten.

Der Aufbau kann entsprechend der Fahrzeugscheibe nach der Erfindung einen Scheibeninnenkörper, eine Polarisatorschicht und/oder eine Lichtleiterschicht aufweisen.

Bei Integration einer Lichtleiterschicht in den Aufbau kann durch Nutzung des Verfahrens nach der Erfindung in einem einstufigen Prozess sowohl eine schaltbare Folie in Form der Flüssigkristallanordnung als auch ein Flächenleuchtsystem in Form der Lichtleiterschicht in die Fahrzeugscheibe integriert werden.

Zudem kann mindestens eine der beiden Folien mit einer Zusatzsubstratschicht versehen werden, die die Flüssigkristallanordnung mechanisch stabilisiert. Die Zusatzsubstratschicht wird insbesondere vor Anordnen des Aufbaus in dem Rahmen auf die betreffende Folie der Flüssigkristallanordnung laminiert. Vorzugsweise werden beide Folien der Flüssigkristallanordnung jeweils mit einer Zusatzsubstratschicht versehen.

Weitere Vorteile und vorteilhafte Ausgestaltungen des Gegenstandes der Erfindung sind der Beschreibung, der Zeichnung und den Patentansprüchen entnehmbar.

Ein Ausführungsbeispiel einer Fahrzeugscheibe nach der Erfindung ist in der Zeichnung schematisch vereinfacht dargestellt und wird in der nachfolgenden Beschreibung näher erläutert. Es zeigt:
- Figur 1: eine Draufsicht auf ein Fahrzeugdach mit einer Fahrzeugscheibe nach der Erfindung;
- Figur 2a: einen Schnitt durch die Fahrzeugscheibe, der den Schichtaufbau derselben zeigt;
- Figur 2b: einen Schnitt durch eine alternative Ausführungsform einer Fahrzeugscheibe;
- Figur 3: einen Schnitt durch eine weitere alternative Ausführungsform einer Fahrzeugscheibe, umfassend eine Flüssigkristallanordnung und eine Lichtleiterschicht;
- Figur 4a bis e: die Herstellung der Fahrzeugscheibe nach Figur 3;
- Figur 5: einen Schnitt durch eine weitere alternative Ausführungsform einer Fahrzeugscheibe nach der Erfindung;
- Figur 6a bis e: die Herstellung der Fahrzeugscheibe nach Figur 5;
- Figur 7: einen schematischen, perspektivischen Schnitt durch eine Flüssigkristallanordnung mit Zusatzsubstratschichten; und
- Figur 8: das Aufbringen der Zusatzsubstratschichten auf die Flüssigkristallanordnung.

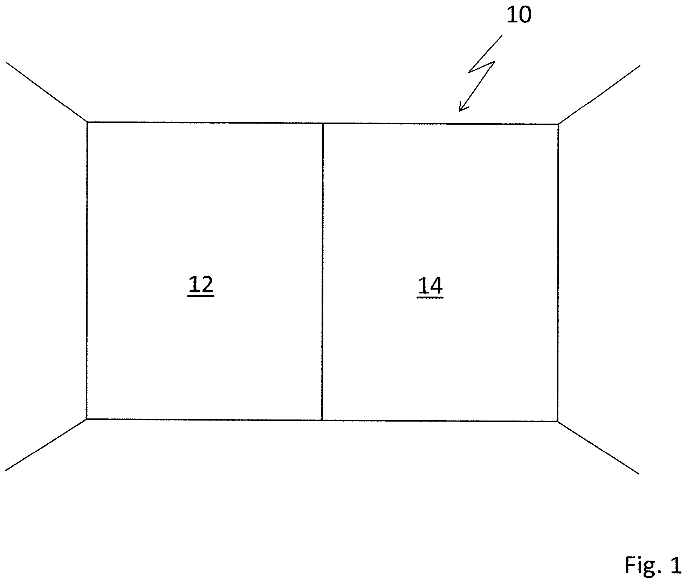

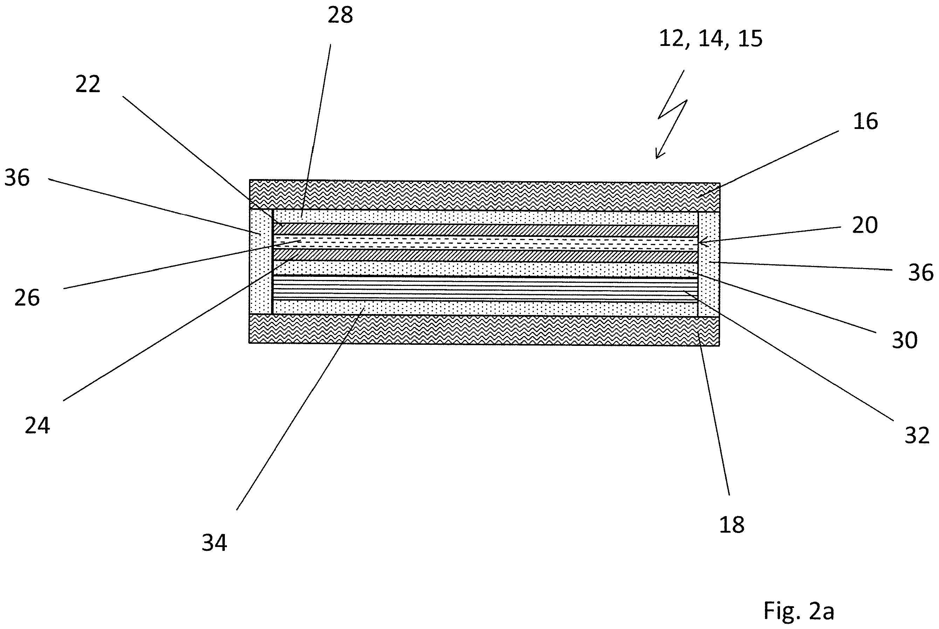

In Figur 1 ist ein Fahrzeugdach 10 eines ansonsten nicht näher dargestellten Kraftfahrzeuges gezeigt. Das Fahrzeugdach 10 ist ein Panoramadach, das mit einem verstellbaren Deckelelement 12 und einem Festdachelement 14 versehen ist. Diese sind jeweils als Glaselement und mithin als Fahrzeugscheibe ausgebildet. Das Deckelelement 12 und das Festdachelement 14 haben jeweils den gleichen Schichtaufbau, der mit einer Beschattungsanordnung versehen ist und der anhand Figur 2a dargestellt ist.

Die jeweils als Fahrzeugscheibe ausgebildeten Dachelemente 12 und 14 umfassen jeweils eine Scheibenanordnung 15 mit einem Scheibenkörper 16, der aus einer entlang einer Dachlängsrichtung und entlang einer Dachquerrichtung gewölbten Glasplatte gebildet ist und die Außenhaut der entsprechenden Fahrzeugscheibe bildet. An der Innenseite umfassen die Fahrzeugscheiben jeweils einen Scheibeninnenkörper 18, der ebenfalls aus einer gewölbten Glasplatte gebildet ist. Der Scheibenkörper 16 und der Scheibeninnenkörper 18 haben jeweils eine Dicke von etwa 2,1 mm und eine einander folgende dreidimensionale Wölbung.

Zwischen dem Scheibenkörper 16 und dem Scheibeninnenkörper 18 ist eine Beschattungsanordnung bildende Flüssigkristallanordnung 20 angeordnet, die zwei Folien 22 und 24 aus PET oder Polycarbonat umfasst, zwischen denen eine einzige Flüssigkristallzelle 26 angeordnet ist. Die beiden transparenten Folien 22 und 24 haben jeweils eine Dicke von etwa 100 µm. Um die Flüssigkristallzelle 26 zwischen einem Transmissionszustand und einem Sperrzustand schalten zu können, sind in die Flüssigkristallanordnung 20 an den Innenseiten der Folien 22 und 24 leitfähige Schichten integriert, die über eine entsprechende, nicht näher dargestellte Kontaktierung mit dem Bordnetz des betreffenden Fahrzeugs verbunden sind. Auf den leitfähigen Schichten ist vorzugsweise jeweils eine Ausrichtungsschicht (alignment layer) 221 bzw. 241 angeordnet, die die Flüssigkristallzellen 26 begrenzt. Die Ausrichtungsschichten 221 und 241 dienen zur Vorausrichtung der Flüssigkristalle der Flüssigkristallzelle 26 im nicht geschalteten Zustand und können jeweils aus einem Polyimid oder einem UV-härtenden Acrylat gebildet sein.

Die Flüssigkristallanordnung 20 ist über eine adhäsive Eigenschaften aufweisende Längenausdehnungskompensationsschicht 28 mit dem Scheibenkörper 16 verbunden. An der dem Scheibenkörper 16 abgewandten Seite ist an die Flüssigkristallanordnung 20 über eine zweite Längenausdehnungskompensationsschicht 30 eine Polarisatorschicht 32 angebunden, welche einen Linearpolarisator umfasst, dessen Polarisationsrichtung rechtwinkelig zu der Polarisationsrichtung der Flüssigkristallzelle 26 in deren Sperrstellung ausgerichtet ist. Die Polarisatorschicht 32 ist wiederum über eine Längenausdehnungskompensationsschicht 34 mit dem Scheibeninnenkörper 18 verbunden.

Die Längenausdehnungskompensationsschichten 28, 30 und 34, die jeweils adhäsive Eigenschaften aufweisen und den Scheibenkörper 16, die Flüssigkristallanordnung 20, die Polarisatorschicht 32 und den Scheibeninnenkörper 18 miteinander verbinden, haben jeweils eine Dicke von etwa 0,4 mm und bestehen jeweils aus einer Acrylatschicht, einer Schicht aus thermoplastischem Polyurethan, einer Epoxidschicht, einer Silikonschicht oder einer Schicht aus einem vernetzenden Material, wie Ethylenvinylacetat (EVA) oder Polyvinylbutyral (PVB). Des Weiteren umfasst der die Fahrzeugscheiben bildende Schichtverbund eine Randversiegelung 36, die die Ränder der Längenausdehnungskompensationsschichten 28, 30 und 34 und der Flüssigkristallanordnung 20 und der Polarisatorschicht 32 übergreift und zwischen dem Glaskörper 16 und dem Glasinnenkörper 18 angeordnet ist.

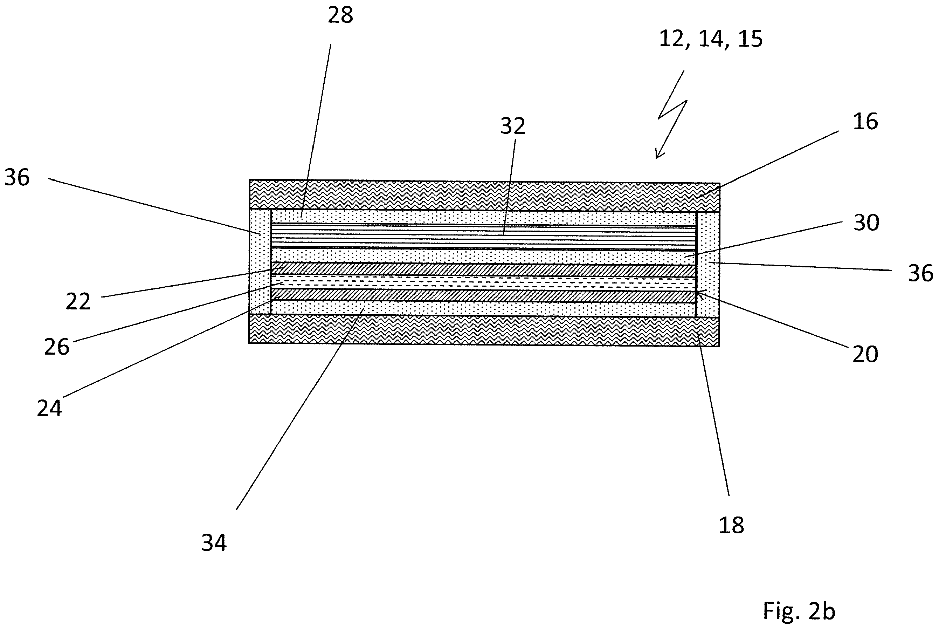

In Figur 2b ist eine Scheibenanordnung 15 dargestellt, die im Wesentlichen der Scheibenanordnung nach Figur 2a entspricht, sich von dieser aber unterscheidet, dass die Polarisationsschicht 32 zwischen dem Glaskörper 16 und der Flüssigkristallanordnung 20 angeordnet ist. Die Längenausdehnungskompensationsschichten 28, 30 und 34 sind zwischen dem Glaskörper 16 und der Polarisationsschicht 32, zwischen der Polarisationsschicht 32 und der Flüssigkristallanordnung 20 und zwischen der Flüssigkristallanordnung 20 und dem Scheibeninnenkörper 18 angeordnet.

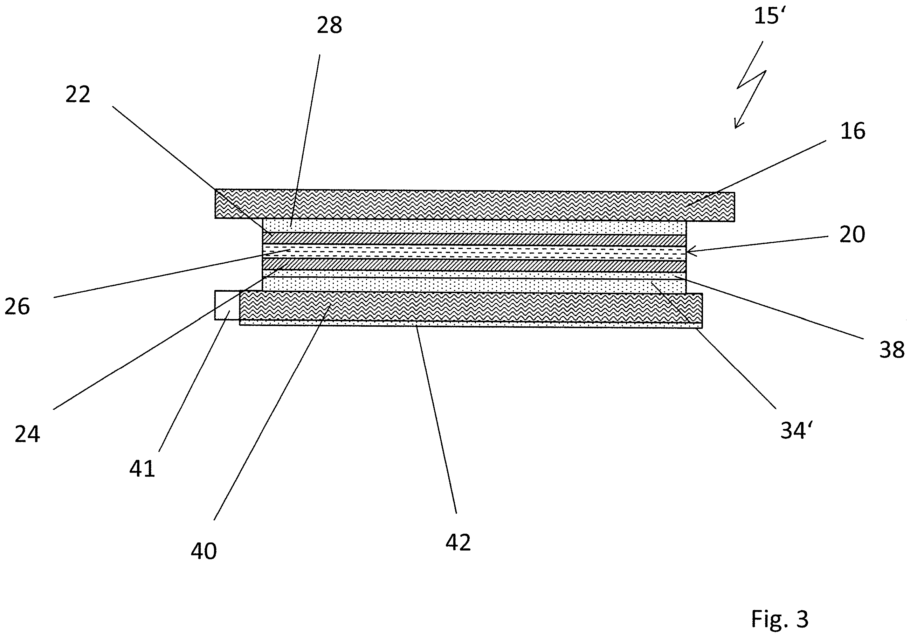

In Figur 3 ist eine alternative Scheibenanordnung 15' zur Nutzung bei einem Deckelelement oder einem Festdachelement der in Figur 1 dargestellten Art gezeigt. Die Scheibenanordnung 15' weist einen Scheibenkörper 16 auf, an den innenseitig über eine Längenausdehnungskompensationsschicht 28, die adhäsive Eigenschaften aufweist, eine Flüssigkristallanordnung 20 angebunden ist. Entsprechend der Ausführungsform nach Figur 2 umfasst die Flüssigkristallanordnung 20 zwei Folien 22 und 24 aus PET oder Polycarbonat, zwischen denen eine einzige Flüssigkristallzelle 26 angeordnet ist. Entsprechend sind an den Innenseiten der Folien 22 und 24 leitfähige Schichten angeordnet, die über eine entsprechende, nicht näher dargestellte Kontaktierung mit dem Bordnetz des betreffenden Fahrzeugs verbindbar sind. Damit kann die Flüssigkristallzelle 26 zwischen einem Transmissionszustand und einem Sperrzustand hin und her geschaltet werden.

An der dem Scheibenkörper 16 aus Einscheibensicherheitsglas abgewandten Seite ist die Flüssigkristallanordnung 20 mit einem Barrierefilm 38 versehen, der eine Diffusion von Feuchtigkeit und Sauerstoff in die Flüssigkristallanordnung 20 verhindert.

An die Flüssigkristallanordnung 20 ist wiederum über eine weitere Längenausdehnungskompensationsschicht 34' eine Lichtleiterschicht 40 angebunden, welche aus einer dünnen Kunststoffplatte aus PMMA (Polymethylmetaacrylat) oder dergleichen gebildet ist, in der zur Erzeugung von Streuzentren Nanopartikel eingebettet sind. An der Innenseite, das heißt der dem Fahrzeuginnenraum zugewandten Seite ist die Lichtleiterschicht 40 zudem mit einer Kratzfestbeschichtung (Hard Coat) 42 versehen.

Die Lichtleiterschicht 40 ist über ihren umlaufenden Rand mit einer Lichtquelle 41 verbunden, so dass in einem entsprechenden Schaltzustand der Lichtquelle Licht in die Lichtleiterschicht 40 eingekoppelt werden kann und diese damit als Beleuchtung für den betreffenden Fahrzeuginnenraum genutzt werden kann.

Die Längenausdehnungskompensationsschichten 28 und 34' sind entsprechend den Längenausdehnungskompensationsschichten der Ausführungsform nach Figur 2 ausgebildet.

Des Weiteren ist bei dem Schichtaufbau nach Figur 3 entsprechend der Ausführungsform nach Figur 2 zusätzlich eine Polarisatorschicht zwischen der Flüssigkristallanordnung 20 und der Lichtleiterschicht 40 angeordnet.

Wie sich aus den vorstehenden Ausführungen ergibt, sind also bei dem in Figur 3 dargestellten Schichtaufbau zwei Funktionalitäten integriert, nämlich einerseits eine Beschattungsfunktionalität in Form der schaltbaren Flüssigkristallanordnung 20 zusammen mit der vorgesehenen Polarisatorschicht und zum anderen eine Beleuchtungsfunktionalität in Form der Lichtleiterschicht 40. Beide Funktionalitäten sind separat voneinander steuerbar.

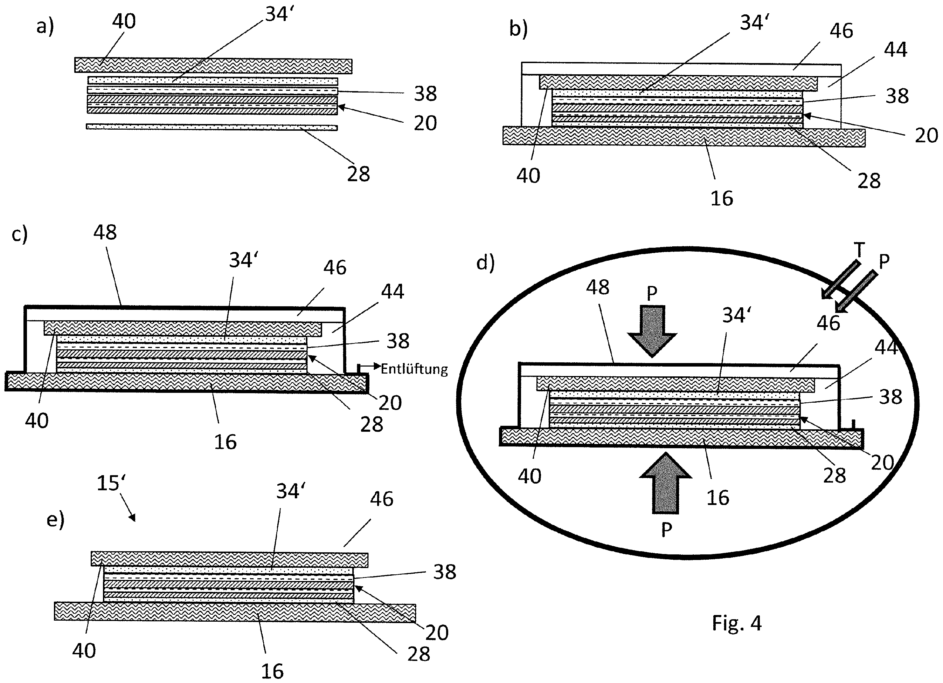

Die Herstellung der in Figur 3 dargestellten Scheibenanordnung 15', die einen Laminationsaufbau bildet, erfolgt in nachfolgend beschriebener Weise und ist anhand Figur 4 dargestellt.

Zunächst werden die Lichtleiterschicht 40, die Flüssigkristallanordnung 20, die mit dem Barrierefilm 38 versehen ist, und die Längenausdehnungskompensationsschichten 28 und 34' bereitgestellt (Figur 4a) und dann in gestapelter Form in einem Rahmen 44 angeordnet und auf den Schiebenkörper 16 aufgelegt. Der Rahmen 44 besteht aus PTFE. Zudem wird auf die oben angeordnete Lichtleiterschicht 40, die mit der Kratzfestbeschichtung 42 versehen ist, eine Druckplatte 46 aufgelegt, so dass eine innige Verbindung zwischen den einzelnen auf den Scheibenkörper 16 aufgelegten Schichten besteht (Figur 4b). Anschließend wird der Rahmen zusammen mit dem Schichtaufbau, der den Scheibenkörper 16, die Längenausdehnungskompensationsschichten 28 und 34', die Flüssigkristallanordnung 20, die Lichtleiterschicht 40 und die Druckplatte 46 umfasst, in einen Vakuumbeutel 48 eingebracht (Figur 4c).

Der Vakuumbeutel 48 wird dann entlüftet und in einer Kammer einem erhöhten Druck P und einer erhöhten Temperatur T ausgesetzt, wodurch sich die Schichten des Schichtaufbaus, das heißt der Scheibenkörper 16, die Längenausdehnungskompensationsschicht 28, die Flüssigkristallanordnung 20, die Längenausdehnungskompensationsschicht 34' und die Lichtleiterschicht 40 miteinander verbinden (Figur 4d). Im Anschluss daran kann die verfügte Scheibenanordnung 15' dem Vakuumbeutel 48 entnommen und aus dem Rahmen 44 entformt werden (Figur 4e).

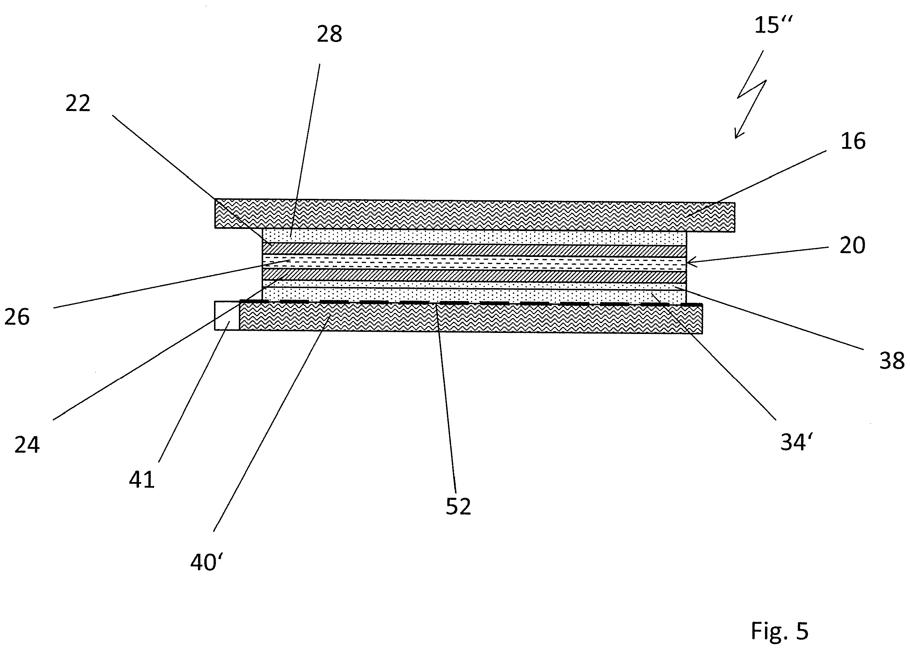

In Figur 5 ist eine weitere alternative Ausführungsform einer Scheibenanordnung 15" zum Einsatz bei einem Deckelelement oder einem Festdachelement der in Figur 1 dargestellten Art gezeigt. Die Scheibenanordnung 15" umfasst ebenfalls einen Scheibenkörper 16, an den innenseitig über eine Längenausdehnungskompensationsschicht 28, die adhäsive Eigenschaften aufweist, eine Flüssigkristallanordnung 20 angebunden ist, die entsprechend der Ausführungsform nach den Figuren 2 und 5 ausgebildet ist. Wiederum ist die Flüssigkristallanordnung 20 an ihrer dem Scheibenkörper 16 abgewandten Seite mit einem Barrierefilm 38 versehen, der Feuchtigkeit und/oder Sauerstoff von einer Diffusion in Richtung der Flüssigkristallanordnung 20 abhält und aus einer aufgedampften Oxidschicht bestehen kann.

Über eine weitere Längenausdehnungskompensationsschicht 34' ist an die Flüssigkristallanordnung 20 eine Lichtleiterschicht 40' angebunden, die als Scheibeninnenkörper aufgefasst werden kann und aus einem Klarglaspaneel besteht. Die Lichtleiterschicht 40' bildet die innere Sichtfläche der Scheibenanordnung 15". An der ihrer inneren Sichtfläche abgewandten Seite ist die Lichtleiterschicht 40' mit einem Druckmuster 52 versehen, das die Wirkung der Lichtleiterschicht 40 als Ambient-Light-Beleuchtungseinrichtung unterstützt. An ihrem umlaufenden Rand ist die Lichtleiterschicht 40' in Einbaulage mit zumindest einer Lichtquelle 41 verbunden, mittels der Licht in die Lichtleiterschicht 40' einkoppelbar ist.

Auch bei der in Figur 5 dargestellten Ausführungsform sind zwei Funktionalitäten integriert, nämlich einerseits eine Beschattungsfunktionalität in Form der schaltbaren Flüssigkristallanordnung 20 zusammen mit einer zusätzlich vorgesehenen Polarisatorschicht und zum anderen eine Beleuchtungsfunktionalität in Form der Lichtleiterschicht 40', die mit der schaltbaren Lichtquelle 41 verbunden ist bzw. verbindbar ist. Wiederum sind beide Funktionalitäten unabhängig voneinander steuerbar.

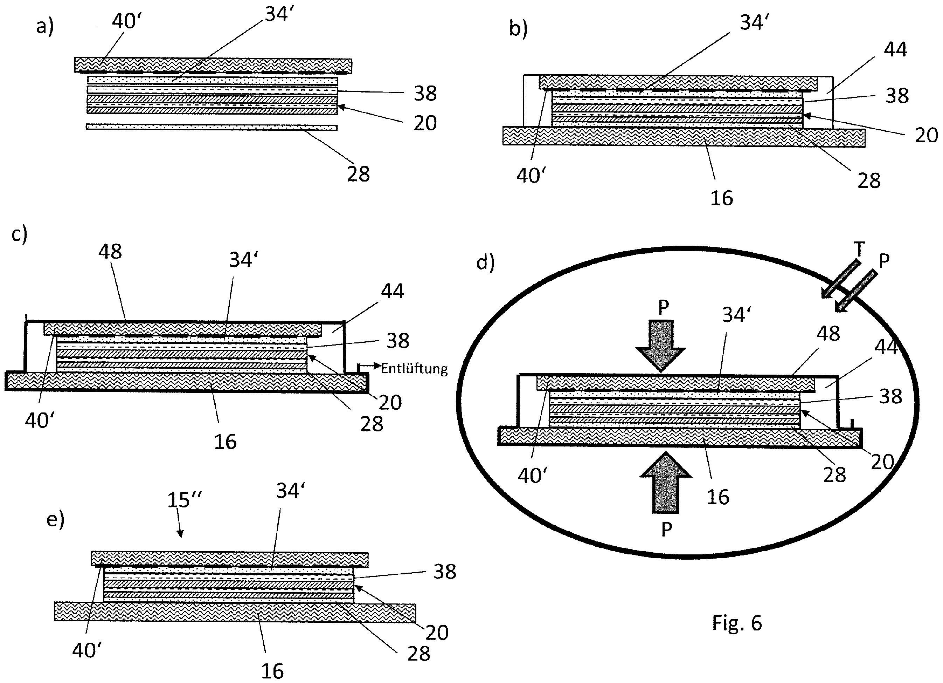

Die Herstellung der in Figur 5 dargestellten, einen Laminationsaufbau bildenden Scheibenanordnung 15" erfolgt im Wesentlichen analog zu der anhand von Figur 4 dargestellten Herstellung der Scheibenanordnung nach Figur 3 und ist anhand Figur 6 dargestellt.

In einem ersten Schritt werden die Längenausdehnungskompensationsschicht 28, die Flüssigkristallanordnung 20 mit dem Barrierefilm 38, die Längenausdehnungskompensationsschicht 34 sowie die aus einem Glaspaneel gebildete, vorgeschnittene Lichtleiterschicht 40' bereitgestellt (Figur 6a). Diese Schichten, die in verfügter Form einen Schichtaufbau mit dem Scheibenkörper 16 bilden sollen, werden dann in einen Rahmen 44 auf dem Scheibenkörper 16 in gestapelter Form angeordnet. Der Rahmen 44 hält die Relativlage der einzelnen genannten Schichten des Schichtaufbaus (Figur 6b). Dann wird der Scheibenkörper 16 zusammen mit dem Rahmen 44, der die genannten Schichten aufnimmt, in einen Vakuumbeutel eingeführt (Figur 6c), der anschließend entlüftet und mit einem erhöhten Druck und einer erhöhten Temperatur beaufschlagt wird. Dadurch werden die Lichtleiterschicht 40', die Flüssigkristallanordnung 20 und der Scheibenkörper 16 in einem Prozessschritt miteinander verfügt (Figur 6d). Im Anschluss daran kann das fertige Produkt, das heißt die Scheibenanordnung 15" dem Vakuumbeutel 48 entnommen werden und nach Lösen von dem Rahmen 44 zur Nutzung bei einem Schiebedach-Deckelelement, einem Festdachelement oder dergleichen bereitgestellt werden (Figur 6e).

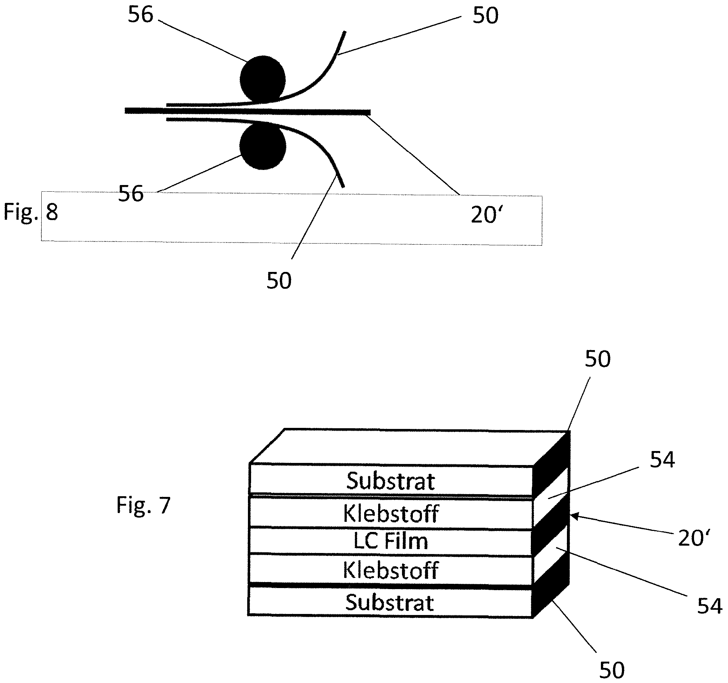

In Figur 7 ist eine Flüssigkristallanordnung 20' dargestellt, die beidseits jeweils mit einer Zusatzsubstratschicht versehen ist, die aus PET oder Polycarbonat besteht und eine zusätzliche Versteifung der Flüssigkristallanordnung 20' bewirkt. Die Zusatzsubstratschichten 50 sind jeweils über eine Klebstoffschicht 54 aus Ethylenvinylacetat, der als Haftklebstoff (PSA) ausgeführt sein kann, mit der jeweiligen Folie 22 bzw. 24 der Flüssigkristallanordnung 20' verbunden.

Wie Figur 8 zu entnehmen ist, kann die Anbindung der Zusatzsubstratschichten 50 an die Flüssigkristallanordnung 20' unter Verwendung von Rollen bzw. Walzen 56 nach einem Rollenlaminationsverfahren erfolgen. Die Flüssigkristallanordnung 20' kann zusammen mit den Zusatzsubstratschichten 50 bei den Ausführungsformen nach den Figuren 2, 3 und 5 die jeweilige Flüssigkristallanordnung ersetzen.

### Bezugszeichenliste

- 10: Fahrzeugdach
- 12: Deckelelement
- 14: Festdachelement
- 15, 15', 15": Scheibenanordnung
- 16: Scheibenkörper
- 18: Scheibeninnenkörper
- 20: Flüssigkristallanordnung
- 22: Folie
- 24: Folie
- 26: Flüssigkristallzelle
- 28: Längenausdehnungskompensationsschicht
- 30: Längenausdehnungskompensationsschicht
- 32: Polarisatorschicht
- 34, 34': Längenausdehnungskompensationsschicht
- 36: Randversiegelung
- 38: Barrierefilm
- 40, 40': Lichtleiterschicht
- 41: Lichtquelle
- 42: Kratzfestbeschichtung
- 44: Rahmen
- 46: Druckplatte
- 48: Vakuumbeutel
- 50: Zusatzsubstratschicht
- 52: Bedruckung
- 54: Klebstoffschicht
- 56: Walzen

## Patentansprüche

1. Fahrzeugscheibe, umfassend einen plattenartigen Scheibenkörper (16) aus Glas oder Kunststoff, der eine einer Fahrzeugumgebung zugewandte Außenseite und eine der Außenseite abgewandte Innenseite hat und an dessen Innenseite eine Beschattungsanordnung angeordnet ist, die aus einer Flüssigkristallanordnung (20) gebildet ist, die eine Flüssigkristallzelle (26) umfasst, sowie einen Scheibeninnenkörper (18), wobei der Scheibenkörper (16) gewölbt ist und die Flüssigkristallanordnung (20), die zwischen dem Scheibenkörper (16) und dem Scheibeninnenkörper (18) angeordnet ist, zwei Folien (22, 24) umfasst, zwischen denen die Flüssigkristallzelle (26) angeordnet ist, und über mindestens eine Längenausdehnungskompensationsschicht (28) an den Scheibenkörper (16) oder den Scheibeninnenkörper (18) angebunden ist, und wobei, wenn die Flüssigkristallzelle (26) über die Längenausdehnungskompensationsschicht (28) an den Scheibenkörper (16) angebunden ist, zwischen dem Scheibeninnenkörper (18) und der Flüssigkristallanordnung (20) oder, wenn die Flüssigkristallzelle (26) über die Längenausdehnungskompensationsschicht (28) an den Scheibeninnenkörper (18) angebunden ist, zwischen dem Scheibenkörper (16) und der Flüssigkristallanordnung (20) eine Polarisatorschicht (32) angeordnet ist, die über eine zweite Längenausdehnungskompensationsschicht (30) an die Flüssigkristallanordnung (20) angebunden ist, wobei
die Längenausdehnungskompensationsschicht (28) eine Acrylatschicht, eine Schicht aus thermoplastischem Polyurethan, eine Epoxidschicht, eine Silikonschicht oder eine Schicht aus einem vernetzenden Material, wie Ethylenvinylacetat (EVA) oder Polyvinylbutyral (PVB), ist,wobei die zweite Längenausdehnungskompensationsschicht (30) aus einer Acrylatschicht, einer Schicht aus thermoplastischem Polyurethan, aus einer Epoxidschicht, aus einer Silikonschicht oder aus einer Schicht aus einem vernetzenden Material, wie Ethylenvinylacetat (EVA) oder Polyvinyl butyral (PVB), gebildet ist, wobei, wenn die Flüssigkristallzelle (26) über die Längenausdehnungskompensationsschicht (28) an den Scheibenkörper (16) angebunden ist, zwischen dem Scheibeninnenkörper (18) und der Polarisatorschicht (32) oder, wenn die Flüssigkristallzelle (26) über die Längenausdehnungskompensationsschicht (28) an den Scheibeninnenkörper (18) angebunden ist, zwischen dem Scheibenkörper (16) und der Polarisatorschicht (32) eine dritte Längenausdehnungskompensationsschicht (34) angeordnet ist, die eine Acrylatschicht, eine Schicht aus thermoplastischem Polyurethan, eine Epoxidschicht, eine Silikonschicht oder eine Schicht aus einem vernetzenden Material, wie Ethylenvinylacetat (EVA) oder Polyvinylbutyral (PVB), ist.

2. Fahrzeugscheibe nach Anspruch 1, **dadurch gekennzeichnet, dass** der Scheibeninnnenkörper (18) aus einem Dünnglas gebildet ist.

3. Fahrzeugscheibe nach Anspruch 1 oder 2, **dadurch gekennzeichnet, dass** die zweite Längenausdehnungskompensationsschicht (30) einen Brechungsindex hat, der dem Brechungsindex der Folien (22, 24) der Flüssigkristallanordnung (20) entspricht.

4. Fahrzeugscheibe nach einem der Ansprüche 1 bis 3 **gekennzeichnet durch** eine Randversiegelung (36), die zumindest die Flüssigkristallanordnung (20) und die Längenausdehnungskompensationsschicht (28) an deren Rändern übergreift und die vorzugsweise aus einer Acrylatschicht, einer Schicht aus thermoplastischem Polyurethan, einer Epoxidschicht, einer Silikonschicht oder aus einer Schicht aus einem vernetzenden Material, wie Ethylenvinylacetat (EVA) oder Polyvinylbutyral (PVB), gebildet ist.

5. Fahrzeugscheibe nach einem der Ansprüche 1 bis 4, **dadurch gekennzeichnet, dass** die beiden Folien (22, 24) der Flüssigkristallanordnung (20) jeweils aus einer Folie aus PET oder Polycarbonat gebildet sind, die vorzugsweise eine Dicke zwischen 50 µm und 250 µm hat.

6. Fahrzeugscheibe nach einem der Ansprüche 1 bis 5, **dadurch gekennzeichnet, dass** die Flüssigkristallanordnung (20) eine einzige Flüssigkristallzelle (26) umfasst.

7. Fahrzeugscheibe nach einem der Ansprüche 1 bis 6, **gekennzeichnet durch** eine Lichtleiterschicht (40, 40'), die über ihren Rand mit einer Lichtquelle verbindbar ist oder über ihren Rand mit einer Lichtquelle verbunden ist.

8. Fahrzeugscheibe nach einem der Ansprüche 1 bis 7, **dadurch gekennzeichnet, dass** mindestens eine der beiden Folien (22, 24) der Flüssigkristallanordnung (20) an der der Flüssigkristallzelle (26) abgewandten Seite mit einer Zusatzsubstratschicht (50) versehen ist, die die Flüssigkristallanordnung (20) mechanisch stabilisiert.

## Claims

1. A vehicle window pane comprising a plate-like window pane body (16) which is made of glass or plastic and which has an outer side facing the surroundings of the vehicle and an inner side facing away from the outer side and on whose inner side a shading arrangement is disposed, the shading arrangement being formed by a liquid crystal arrangement (20) which comprises a liquid crystal cell (26), and a window pane inner body (18), the window pane body (16) being curved, and the liquid crystal arrangement (20), which is disposed between the window pane body (16) and the window pane inner body (18), comprising two films (22, 24) between which the liquid crystal cell (26) is disposed, and the liquid crystal arrangement (20) being connected to the window pane body (16) or the window pane inner body (18) via at least one longitudinal-expansion compensation layer (28), and a polarizer layer (32) being disposed between the window pane inner body (18) and the liquid crystal arrangement (20) if the liquid crystal cell (26) is connected to the window pane body (16) via the longitudinal-expansion compensation layer (28) or between the window pane body (16) and the liquid crystal arrangement (20) if the liquid crystal cell (26) is connected to the window pane inner body (18) via the longitudinal-expansion compensation layer (28), the polarizer layer (32) being connected to the liquid crystal arrangement (20) via a second longitudinal-expansion compensation layer (30), the longitudinal-expansion compensation layer (28) being an acrylate layer, a layer of thermoplastic polyurethane, an epoxy layer, a silicone layer or a layer of a cross-linking material, such as ethylene-vinyl acetate (EVA) or polyvinyl butyral (PVB), the second longitudinal-expansion compensation layer (30) being an acrylate layer, a layer of thermoplastic polyurethane, an epoxy layer, a silicone layer or a layer of a cross-linking material, such as ethylene-vinyl acetate (EVA) or polyvinyl butyral (PVB), a third longitudinal-expansion compensation layer (34) being disposed between the window pane inner body (18) and the polarizer layer (32) if the liquid crystal cell (26) is connected to the window pane body (16) via the longitudinal-expansion compensation layer (28) or between the window pane body (16) and the polarizer layer (32) if the liquid crystal cell (26) is connected to the window pane inner body (18) via the longitudinal-expansion compensation layer (28), the third longitudinal-expansion compensation layer (34) being an acrylate layer, a layer of thermoplastic polyurethane, an epoxy layer, a silicone layer or a layer of a cross-linking material, such as ethylene-vinyl acetate (EVA) or polyvinyl butyral (PVB).

2. The vehicle window pane according to claim 1, **characterized in that** the window pane inner body (18) is made of thin glass.

3. The vehicle window pane according to claim 1 or 2, **characterized in that** the second longitudinal-expansion compensation layer (30) has a refractive index that corresponds to the refractive index of the films (22, 24) of the liquid crystal arrangement (20).

4. The vehicle window pane according to any one of claims 1 to 3, **characterized by** an edge sealing (36) which covers the edges of at least the liquid crystal arrangement (20) and the longitudinal-expansion compensation layer (28) and which is preferably made of an acrylate layer, a layer of thermoplastic polyurethane, an epoxy layer, a silicone layer or of a layer of a cross-linking material, such as ethylene-vinyl acetate (EVA) or polyvinyl butyral (PVB).

5. The vehicle window pane according to any one of claims 1 to 4, **characterized in that** the two films (22, 24) of the liquid crystal arrangement (20) are each formed by a film of PET or polycarbonate, which preferably has a thickness between 50 µm and 250 µm.

6. The vehicle window pane according to any one of claims 1 to 5, **characterized in that** the liquid crystal arrangement (20) comprises a single liquid crystal cell (26).

7. The vehicle window pane according to any one of claims 1 to 6, **characterized by** a light guide layer (40, 40') which can be or is connected to a light source via its edge.

8. The vehicle window pane according to any one of claims 1 to 7, **characterized in that** at least one of the two films (22, 24) of the liquid crystal arrangement (20) is provided with an additional substrate layer (50) on the side facing away from the liquid crystal cell (26), the additional substrate layer (50) mechanically stabilizing the liquid crystal arrangement (20).

## Revendications

1. Vitre de véhicule comprenant un corps de vitre (16) en forme de plaque qui est en verre ou en plastique et qui a une face extérieure tournée vers l'environnement du véhicule et une face intérieure détournée de la face extérieure et sur la face intérieure duquel un ensemble ombrageant est disposé, l'ensemble ombrageant étant formé par un ensemble à cristaux liquides (20) qui comprend une cellule à cristaux liquides (26), et un corps de vitre intérieur (18), le corps de vitre (16) étant courbé, et l'ensemble à cristaux liquides (20), qui est disposé entre le corps de vitre (16) et le corps de vitre intérieur (18), comprenant deux films (22, 24) entre lesquels la cellule à cristaux liquides (26) est disposée, et l'ensemble à cristaux liquides (20) étant lié au corps de vitre (16) ou au corps de vitre intérieur (18) par au moins une couche de compensation d'expansion longitudinale (28), et une couche polarisante (32) étant disposée entre le corps de vitre intérieur (18) et l'ensemble à cristaux liquides (20) si la cellule à cristaux liquides (26) est liée au corps de vitre (16) par la couche de compensation d'expansion longitudinale (28) ou entre le corps de vitre (16) et l'ensemble à cristaux liquides si la cellule à cristaux liquides (26) est liée au corps de vitre intérieur (18) par la couche de compensation d'expansion longitudinale (28), la couche polarisante (32) étant liée à l'ensemble à cristaux liquides (20) par une deuxième couche de compensation d'expansion longitudinale (30), la couche de compensation d'expansion longitudinale (28) étant une couche d'acrylate, une couche de polyuréthane thermoplastique, une couche époxy, une couche de silicone ou une couche d'une matière réticulante, telle que l'éthylène-acétate de vinyle (EVA) ou le polyvinylbutyral (PVB), la deuxième couche de compensation d'expansion longitudinale (30) étant une couche d'acrylate, une couche de polyuréthane thermoplastique, une couche époxy, une couche de silicone ou une couche d'une matière réticulante, telle que l'éthylèneacétate de vinyle (EVA) ou le polyvinylbutyral (PVB), une troisième couche de compensation d'expansion longitudinale (34) étant disposée entre le corps de vitre intérieur (18) et la couche polarisante (32) si la cellule à cristaux liquides (26) est liée au corps de vitre (16) par la couche de compensation d'expansion longitudinale (28) ou entre le corps de vitre (16) et la couche polarisante (32) si la cellule à cristaux liquides (26) est liée au corps de vitre intérieur (18) par la couche de compensation d'expansion longitudinale (28), la troisième couche de compensation d'expansion longitudinale (34) étant une couche d'acrylate, une couche de polyuréthane thermoplastique, une couche époxy, une couche de silicone ou une couche d'une matière réticulante, telle que l'éthylène-acétate de vinyle (EVA) ou le polyvinylbutyral (PVB).

2. Vitre de véhicule selon la revendication 1, **caractérisée en ce que** le corps de vitre intérieur (18) est en verre mince.

3. Vitre de véhicule selon la revendication 1 ou 2, **caractérisée en ce que** la deuxième couche de compensation d'expansion longitudinale (30) a un indice de réfraction qui correspond à l'indice de réfraction des films (22, 24) de l'ensemble à cristaux liquides (20).

4. Vitre de véhicule selon l'une quelconque des revendications 1 à 3, **caractérisée par** un scellement de bord (36) qui couvre les bords d'au moins l'ensemble à cristaux liquides (20) et la couche de compensation d'expansion longitudinale (28) et qui est, de préférence, fait à partir d'une couche d'acrylate, d'une couche de polyuréthane thermoplastique, d'une couche époxy, d'une couche de silicone ou d'une couche d'une matière réticulante, telle que l'éthylène-acétate de vinyle (EVA) ou le polyvinylbutyral (PVB).

5. Vitre de véhicule selon l'une quelconque des revendications 1 à 4, **caractérisée en ce que** les deux films (22, 24) de l'ensemble à cristaux liquides (20) sont formés chacun par un film de PET ou de polycarbonate, qui a, de préférence, une épaisseur entre 50 µm et 250 µm.

6. Vitre de véhicule selon l'une quelconque des revendications 1 à 5, **caractérisée en ce que** l'ensemble à cristaux liquides (20) comprend une seule cellule à cristaux liquides (26).

7. Vitre de véhicule selon l'une quelconque des revendications 1 à 6, **caractérisée par** une couche conductrice de lumière (40, 40') qui peut être ou est liée à une source de lumière par son bord.

8. Vitre de véhicule selon l'une quelconque des revendications 1 à 7, **caractérisée en ce qu'**au moins un des deux films (22, 24) de l'ensemble à cristaux liquides (20) est muni d'une couche (50) de substrat additionnelle du côté détourné de la cellule à cristaux liquides (26), la couche (50) de substrat additionnelle stabilisant mécaniquement l'ensemble à cristaux liquides (20).
